# EUROPÄISCHE PATENTSCHRIFT

(11) **EP 1 906 733 B1**
(45) Veröffentlichungstag und Bekanntmachung des Hinweises auf die Patenterteilung: **12.09.2012**
(21) Anmeldenummer: 06764182.9
(22) Anmeldetag: 17.07.2006
(51) Int. Cl.: A01N 43/653, A01P 3/00

(54) **KOMBINIERTE VERWENDUNG VON METCONAZOL UND EPOXICONAZOL ZUR VERRINGERUNG ODER VERHINDERUNG DER KONTAMINATION VON GETREIDE MIT MYKOTOXINEN**
COMBINED USE OF METCONAZOLE AND EPOXICONAZOLE FOR REDUCING OR PREVENTING THE CONTAMINATION OF CEREALS WITH MYCOTOXINS
UTILISATION COMBINEE DE METCONAZOLE ET D'EPOXICONAZOLE POUR REDUIRE OU EMPECHER LA CONTAMINATION DE CEREALES PAR DES MYCOTOXINES

(30) Priorität: 18.07.2005 DE 102005033433
(43) Veröffentlichungstag der Anmeldung: 09.04.2008
(73) Patentinhaber: BASF SE, 67056 Ludwigshafen (DE)
(72) Erfinder: SEMAR, Martin, 76889 Gleiszellen-Gleishorbach (DE); CHRISTEN, Thomas, 67125 Dannstadt (DE); SCHERER, Maria, 76829 Landau (DE); STIERL, Reinhard, 67251 Freinsheim (DE); STRATHMANN, Siegfried, 67117 Limburgerhof (DE); SCHÖFL, Ulrich, 68782 Brühl (DE); BEDFORD, John, Bollington SK 105 RE (GB)
(74) Vertreter: Reitstötter - Kinzebach
(86) Internationale Anmeldenummer: PCT/EP2006/064322
(87) Internationale Veröffentlichungsnummer: WO 2007/009969

(56) Entgegenhaltungen:
- WO-A-96/01054
- US-A- 4 816 406
- CHALA A ET AL: "An integrated approach to the evaluation of the efficacy of fungicides against fusarium culmorum, the cause of head blight of wheat" JOURNAL OF PHYTOPATHOLOGY - PHYTOPATHOLOGISCHE ZEITSCHRIFT, BLACKWELL, BERLIN, DE, Bd. 151, 2003, Seiten 673-678, XP002357495 ISSN: 0931-1785
- MENNITI ANNA MARIA ET AL: "Effect of fungicides on Fusarium head blight and deoxynivalenol content in durum wheat grain." EUROPEAN JOURNAL OF PLANT PATHOLOGY, Bd. 109, Nr. 2, Februar 2003 (2003-02), Seiten 109-115, XP002422339 ISSN: 0929-1873
- EDWARDS S G ET AL: "QUANTIFICATION OF TRICHOTHECENE-PRODUCING FUSARIUM SPECIES IN HARVESTED GRAIN BY COMPETITIVE PCR TO DETERMINE EFFICACIES OF FUNGICIDES AGAINST FUSARIUM HEAD BLIGHT OF WINTER WHEAT" APPLIED AND ENVIRONMENTAL MICROBIOLOGY, WASHINGTON,DC, US, Bd. 67, Nr. 4, April 2001 (2001-04), Seiten 1575-1580, XP001076826 ISSN: 0099-2240

## Beschreibung

Die vorliegende Erfindung betrifft die kombinierte Verwendung von Metconazol und Epoxiconazol zur Verringerung oder Verhinderung der Kontamination von Getreide mit Mykotoxinen, die von Trichothecen-produzierenden Schimmelpilzen gebildet werden.

Das Erntegut aller Getreidearten, wie Weizen, Gerste, Roggen, Triticale, Hafer, Reis und Mais, aber auch vieler anderer Pflanzenarten, kann mit Trichothecen-Toxinen und anderen Mykotoxinen, die von Trichothecen-produzierenden Schimmelpilzen stammen, kontaminiert sein. Am stärksten betroffen sind dabei Triticale, Hafer, Weichweizen und insbesondere Durum-Weizen. Quellen dieser Toxine sind dabei bestimmte Pilze, beispielsweise solche der Gattungen Trichoderma, Stachybotrys und insbesondere Fusarium, die diese Pflanzen befallen. Weltweit gelten derartige Fusariosen als wichtige Getreidekrankheit und betreffen neben den klassischen Weizenanbauregionen in den USA und in Kanada auch Australien und Europa. Der Fusarium-Pilz kommt hauptsächlich im Boden vor, wo er zusammen mit anderen Mikroorganismen Pflanzenreste zersetzt. Dabei kann er gleichermaßen auf lebendem und totem Material existieren. Ein stärkeres Auftreten als Getreidekrankheit wird durch mehrere Faktoren begünstigt:
- mit Fusarium befallene organische Substanz am Boden (als Inokulum), wobei vor allem Maisstoppeln und Maisstrohreste die Kontamination begünstigen (siehe z.B. A. Meier, B. Birzele, E. Oerke, U. Steiner, J. Krämer und H. Dehne, "Significance of different inoculum source for the Fusarium infection of wheat ears.", Mycotoxin Research 1, 2001, 71-75)
- ausreichend feuchtwarme Witterung im Frühjahr und Frühsommer, die dem Pilz die Bildung von Sporenbehältern ermöglicht
- Wechsel von Niederschlägen und Sonneneinstrahlung zur Verbreitung der Sporen
- Blühphase der Pflanze (v.a. Getreide) während des Sporenflugs (siehe z.B. A. Obst, V.H. Paul, "Krankheiten und Schädlinge des Getreides", Verlag Th. Mann, Gelsenkirchen-Buer, 1993).

Die Infektion von Getreide mit Fusarium-Pilzen führt zu einem charakteristischen Ährenbefall, bei dem einzelne Ährchen ausbleichen und manchmal ein rötliche Sporenbelag erkennbar ist. Meist vertrocknen die Ährchen oberhalb der befallenen Stelle und es wird dort nur ein Schmachtkorn gebildet. Unterhalb der befallenen Stelle können durchaus normal große Körner heranreifen, die aber in der Regel mit Pilztoxinen belastet sind. Fusarium-Pilze können daher nicht nur die Erträge mindern, sondern kontaminieren insbesondere das geerntete Getreide mit Mykotoxinen. Die Kontamination der Getreidekörner kann sowohl in der Ähre und seltener während der Lagerung des Ernteguts erfolgen.

Nach Verzehr von kontaminierten Pflanzen und Pflanzenteilen, z.B. von Getreide oder von daraus hergestellten Produkten, können die enthaltenen Mykotoxine bereits in geringsten Dosen bei Mensch und Tier schwere akute oder chronische Krankheiten verursachen. Eine akute Gesundheitsbeeinträchtigung durch Trichothecen-Toxine und andere Mykotoxine, die von Trichothecen-produzierenden Pilzen stammen, kann sich in vielen Symptomen äußern, beispielsweise in einer Beeinträchtigung des Immunsystems, einer IgA-Nephropathie (Berger's Disease), Übelkeit, Schädigung der Nieren, bei Haustieren Futterverweigerung und Erbrechen sowie in der Geflügelzucht eine verminderte Legeleistung. Außerdem weisen diese Mykotoxine bei Mensch und Tier eine östrogene und/oder mutagene Aktivität auf (siehe z.B. "Mykotoxine und ihr Einfluss auf die Immunreaktionen", H. Köhler, Bundesinstitut für gesundheitlichen Verbraucherschutz und Veterinärmedizin, Fachbereich 4, Jena, z.B. zu finden unter http://www.bgvv.de/sixcms_upload/media/98/koehler.pdf). Bei Brauweizen wird ein Zusammenhang zwischen der Kontamination mit derartigen Toxinen und dem Überschäumen des Bieres vermutet (P. Gjersten, "Gushing in Beer: Its nature, cause and prevention", Brewers Digest 42, 1967, 80-84).

Um eine Gesundheitsbeeinträchtigung durch die Aufnahme der oben genannten Mykotoxine zu vermeiden, haben nationale und supranationale Behörden festgelegt, welche Maximalmengen an Mykotoxinen tolerierbar sind. So empfiehlt der Lebensmittelausschuss der EU bei Erwachsenen 0,001 mg DON (Deoxynivalenol; ein Trichothecen-Toxin) pro Kilogramm Körpergewicht als TDI (Tolerable Daily Intake). Nach der Mykotoxin-Höchstmengenverordnung in Deutschland darf in Getreidekörnern zum direkten Verzehr und in verarbeiteten Getreideerzeugnissen maximal 0,5 mg DON pro Kilogramm eingesetztes Getreide enthalten sein. In Gebäck und feinen Backwaren dürfen die DON-Gehalte 0,35 mg/kg nicht überschreiten, während in Säuglings- und Kleinkindernahrung 0,1 mg/kg die Obergrenze bilden. (siehe z.B. "Mykotoxine und ihr Einfluss auf die Immunreaktionen", H. Köhler, Bundesinstitut für gesundheitlichen Verbraucherschutz und Veterinärmedizin, Fachbereich 4, Jena, z.B. zu finden unter http://www.bgvv.de/sixcms_upload/media/98/koehler.pdf; außerdem Verordnung über Höchstmengen an Mykotoxinen in Lebensmitteln (Mykotoxin-Höchstmengenverordnung, MHmV) vom 2. Juni 1999, Bundesgesetzblatt, Jahrgang 1999, Teil 1, Nr. 29, Seite 1248)

Zur Verringerung des Gehalts an den vorgenannten Mykotoxinen in Pflanzen und Pflanzenteilen sowie in den daraus gewonnenen Lebensmitteln und Tierfutter werden zur Zeit im Wesentlichen folgende Maßnahmen eingesetzt:
- Anbau von Sorten mit geringer Anfälligkeit für Fusarium-Befall;
- geeignete Fruchtfolgen; insbesondere Vermeidung von Mais als Vorfrucht;
- wendende Bodenbearbeitung, vor allem bei Mais als Vorfrucht;
- Lagerbedingungen, die einer Entwicklung von Fusarium-Pilzen vorbeugen.

Diese rein präventiv wirkenden Maßnahmen sind jedoch noch nicht zufriedenstellend und greifen insbesondere dann nicht zuverlässig, wenn entsprechende Witterungsbedingungen herrschen, die den Befall mit Schimmelpilzen begünstigen.

Die EP-A-0769906 beschreibt in allgemeiner Form die Verwendung von Metconazol in Kombination mit einem weiteren Triazol-Fungizid zur Bekämpfung von Schadpilzen bei Pflanzen und Pflanzenprodukten. Die Zusammensetzung wird insbesondere zur Bekämpfung von Schadpilzen in Holz und Holzprodukten sowie in Textilien eingesetzt.

A. Chala et al. beschreiben in J. Phytopathology 151, 2003, 673-678 die Verwendung diverser kommerziell erhältlicher Strobilurine und eines Azolfungizids zur Bekämpfung von Fusarium culmorum bei Weizen.

A.M. Menniti et al. beschreiben in European Journal of Plant Pathology, 109, 2003, 109-115 die Wirkung diverser Fungizide, wie Prochloraz, Tebuconazol, Epoxiconazol oder Bromuconazol, auf den DON-Gehalt von Weizen nach der Infektion mit Fusarium-Pilzen.

S.G. Edwards et al. beschreiben in Applied and Environmental Microbiology, Apr. 2001, 1575-1580 die Entwicklung eines PCR-basierten Assays zur Quantifizierung von Trichothecen-produzierendem Fusarium. Es wird außerdem berichtet, dass Metconazol und Tebuconazol die Menge an Fusarium in geerntetem Weizen reduzieren sollen.

Die US 4,816,406 beschreibt die Verwendung von Ancymidol zur Inhibierung der Biosynthese von Trichothecen-Toxinen.

Es besteht ein Bedarf danach, die Kontamination von Pflanzen und Pflanzenprodukten, die für den menschlichen und tierischen Verzehr gedacht sind, und insbesondere von Getreide mit Trichothecen-Toxinen und anderen Toxinen, die von Trichothecen-bildenden Pilzen stammen, effektiver zu verringern oder zu verhindern.

Aufgabe der vorliegenden Erfindung war es daher, Verbindungen bereitzustellen, welche zu einer Verringerung oder Verhinderung der Kontamination von Getreide mit Toxinen, die von Trichothecen-produzierenden Pilzen gebildet werden, führen.

Überraschenderweise wurde gefunden, dass die gemeinsame Verwendung von Metconazol und Epoxiconazol die Kontamination von Getreide mit solchen Toxinen verringert oder verhindert.

Die Aufgabe wurde daher gelöst durch die Verwendung von Metconazol in Kombination mit Epoxiconazol zur Verringerung oder Verhinderung der Kontamination von Getreide mit Toxinen, die von Trichothecen-produzierenden Pilzen gebildet werden.

Die kombinierte Verwendung von Metconazol und Epoxiconazol kann einerseits darin bestehen, dass man eine Zusammensetzung, welche diese beiden Wirkstoffe enthält, einsetzt.

Ein Gegenstand der Erfindung ist daher auch die Verwendung einer Zusammensetzung, enthaltend Metconazol und Epoxiconazol, zur Verringerung oder Verhinderung der Kontamination von Getreide mit Toxinen, die von Trichothecen-produzierenden Pilzen gebildet werden.

Die kombinierte Verwendung von Metconazol und Epoxiconazol kann andererseits auch darin bestehen, dass die beiden Wirkstoffe getrennt, jedoch in einem zeitlich nahen Zusammenhang zur Anwendung kommen. Nähere Erläuterungen zur kombinierten Anwendung von Metconazol und Epoxiconazol finden sich in den nachfolgenden Ausführungen.

Bei den Toxinen, die von Trichothecen-produzierenden Pilzen gebildet werden, handelt es sich sowohl um Trichothecene als auch um davon verschiedene Toxine, die von den gleichen Schimmelpilzen stammen.

Bei den Trichothecen-produzierenden Pilzen handelt es sich vorzugsweise um solche der Gattungen Trichoderma, Stachybotrys und insbesondere Fusarium.

Von Bedeutung sind im Zusammenhang mit der Mykotoxinproduktion verschiedene Fusarium-Pilze, beispielsweise: *F. culmorum und F. graminearum* als wichtigste Arten (Mauler-Machnik A. & Suty A., 2000: Aktueller Stand der internationalen Forschung zur Bekämpfung von Ährenfusariosen in Weizen. 22. Mykotoxin-Workshop, Bonn, 5.-7. Juni 2000), des Weiteren aber auch *F. acuminatum, F. avenaceum, F. crockwellense, F. equiseti, F. moniliforme, F. oxysporum, F. poae, F. proliferans, F. scirpi, F. sporotrichioides, F. subglutinans* und *F. tricinctum.* (H. Schnerr, "Quantitativer Nachweis von Deoxynivalenol und Trichothecene-bildenden Fusarium spp. mit Biosensor und PCR in Getreide, Dissertation, 2002, Technische Universität München; W.F.O. Marasas, P.E. Nelson und T.A. Toussoun, Fusarium species: Identity and mycotoxicology, The Pennsylvania State University Press, 1984, University Park and London; L. Niessen und R.F. Vogel, Group-specific PCR-Detection of Potential Trichothecen-Producing Fusarium Species in Pure Cultures and Cereal Samples, System. Appl. Microbiol., 1998, 21:618-631; A. Bottalico, Fusarium diseases of cereals: Species complex and related mycotoxin profiles in Europe, J. Plant Pathol. 1998, 80:85-103)

Bei der Gattung Trichoderma ist insbesondere der Vertreter *Trichoderma viride* in diesem Zusammenhang von Bedeutung. Bei den Schimmelpilzen der Gattung Stachybotrys handelt es sich insbesondere um *Stachybotrys chartarum.*

Insbesondere handelt es sich bei den Trichothecen-produzierenden Pilzen um Vertreter der Gattung Fusarium.

Bei den Mykotoxinen handelt es sich vorzugsweise um Trichothecene oder Zearalenon.

Zearalenon ist ein östrogen wirkendes Mykotoxin, das von verschiedenen Arten der Gattung Fusarium gebildet wird. Bevorzugte Substrate der Zearalenon bildenden Pilze sind Mais und Hafer. Es können aber auch andere Getreidearten stark befallen werden. Da Zearalenon in einer sehr späten Entwicklungsphase des Pilzes gebildet wird, ist es vor allem in stark befallenem Getreide zu finden. Zearalenon ist nicht akut toxisch, man vermutet jedoch eine karzinogene Wirkung. Bei Weidetieren bewirkt es Fertilitätsstörungen, Früh- und Totgeburten (siehe z.B. H. Schnerr, "Quantitativer Nachweis von Deoxynivalenol und Trichothecene-bildenden Fusarium spp. mit Biosensor und PCR in Getreide, Dissertation, 2002, Technische Universität München; "Mykotoxine und ihr Einfluss auf die Immunreaktionen", H. Köhler, Bundesinstitut für gesundheitlichen Verbraucherschutz und Veterinärmedizin, Fachbereich 4, Jena, z.B. zu finden unter http://www.bgvv.de/sixcms_upload/media/98koehler.pdf).

Als Trichothecene werden eine Gruppe von ca. 100 Mykotoxinen bezeichnet, die insbesondere von Fusarien, aber auch von anderen Schimmelpilzen auf Pflanzen und Pflanzenprodukten, insbesondere auf Getreide und Getreideprodukten gebildet werden. Trichothecene besitzen ein breites Spektrum biologischer Wirkungen. Generell hemmen Trichothecene die Proteinbiosynthese in Säugetierzellen, zum Teil schon ab Konzentrationen von 1 ng. Vergiftungen mit Trichothecenen führen zu Erbrechen, Durchfall, Nahrungsverweigerung, Entzündungen des Magen-Darm-Traktes, Beeinträchtigung von Nervenzellen, Herzmuskel, Lymphsystem, Testes, Thymus und Bildung von Gewebsnekrosen. Vergiftungen von Tieren und Menschen sind beispielsweise unter der Bezeichnung "moldy-corn-toxicose" (USA), "bean-hull-toxicose" (Japan) oder "alimentary toxic aleukia" (GUS) bekannt. Nach ihrer chemischen Struktur werden die Trichothecene in die Gruppen A bis D unterteilt.

Von Bedeutung sind insbesondere folgende Trichothecen-Toxine: T-2 Toxin, HT-2 Toxin, Neosolaniol, Monoacetoxyscirpenol, Diacetoxyscirpenol (DAS), 15-Acetoxyscirpendiol, Deoxynivalenol (DON = Vomitoxin), Nivalenol, 3-Acetoxynivalenol, 15-Acetoxynivalenol, Fusarenon, T-2 Tetraol und Verrucarol.

Insbesondere handelt es sich bei den Mykotoxinen um Deoxynivalenol (DON).

Bei Getreide handelt es sich beispielsweise um Weizen, Reis, Mais, Gerste, Hafer, Triticale und Roggen. Der Begriff "Getreide" steht im Rahmen der vorliegenden Erfindung sowohl für die Pflanze selbst als auch für ihr Ernteprodukt, wie Getreidekörner bzw. beim Mais auch der Maiskolben.

Besonders bevorzugt ist das Getreide ausgewählt unter Weizen, wie Durum-Weizen oder Weichweizen.

Insbesondere wird die Kombination aus Metconazol und Epoxiconazol zur Verringerung oder Verhinderung der Kontamination von Weizen mit Deoxynivalenol (DON) eingesetzt.

Metconazol und Epoxiconazol sind bekannte Conazol-Fungizide vom Triazol-Typus und weisen folgende Strukturformeln auf (I = Metconazol; II = Epoxiconazol):

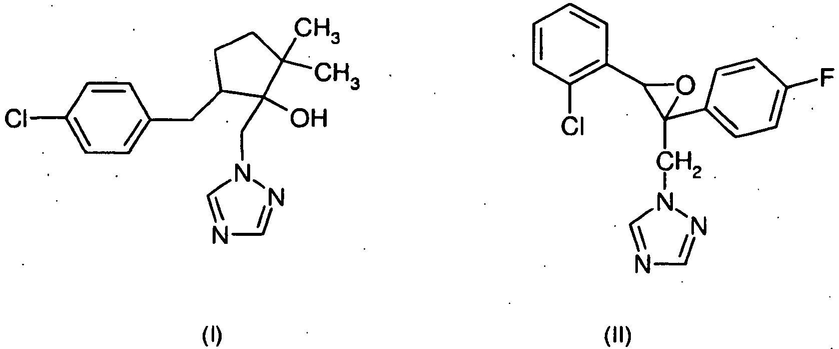

Diese Verbindungen können in die Zusammensetzung sowohl als freie Base als auch als Salz eingesetzt werden. Die Salze werden aus der freien Form durch Umsetzung mit einer Säure erhalten. Zu den geeigneten Säuren gehören beispielsweise Mineralsäuren wie Fluorwasserstoffsäure, Salzsäure, Bromwasserstoffsäure, Schwefelsäure, Salpetersäure und Phosphorsäure, sowie organische Säuren wie Essigsäure, Hydroxyessigsäure, Propionsäure, Methansulfonsäure, Benzolsulfonsäure und dergleichen.

Die beiden Wirkstoffe (I) und (II) und speziell ihre Salze können auch in Form ihrer Solvate, z.B. als Hydrate oder Alkoholate, erfindungsgemäß zum Einsatz kommen.

Außerdem können die Verbindungen (I) und (II) sowohl als reine Stereoisomere als auch in Form von Stereoisomerengemischen eingesetzt werden. Der Begriff Stereoisomerie bezieht sich dabei auf Z/E-Isomere, die beim Metconazol auf die relative Position der Substituenten in der 1,5-Stellung am Cyclopentanring und bei Epoxiconazol auf die relative Position der Substituenten in der 2,3-Stellung am Oxiranring zurückzuführen sind.

Des Weiteren können sowohl die einzelnen Enantiomeren als auch Enantiomerengemische der jeweiligen Z- oder E-Isomere von (I) und/oder (II) eingesetzt werden.

Metconazol und Epoxiconazol werden in einem solchen Mengenverhältnis eingesetzt, dass eine synergistische Wirkung dieser Kombination bezüglich der Verringerung oder Verhinderung der Kontamination von Getreide mit den genannten Mykotoxinen auftritt. Vorzugsweise beträgt das Mengenverhältnis von Metconazol zu Epoxiconazol 20:1 bis 1:20, besonders bevorzugt 10:1 bis 1:10, stärker bevorzugt 5:1 bis 1:5 und insbesondere 2:1 bis 1:3, z.B. 1:1 bis 1:2.

Die Verwendung der erfindungsgemäß eingesetzten Kombination aus Metconazol und Epoxiconazol zur Verringerung oder Verhinderung der Kontamination mit den zuvor genannten Mykotoxinen erfolgt allgemein in der Weise, dass das Getreide oder Pflanzenteile davon bzw. die Getreideprodukte mit einer Kombination dieser Wirkstoffe behandelt werden. Die Behandlung des Getreides bzw. der Getreideprodukte erfolgt vorzugsweise so, dass das Getreide oder Pflanzenteile davon bzw. das Getreideprodukt mit beiden Wirkstoffen bzw. mit einer Zusammensetzung, welche die beiden Wirkstoffe enthält, in Kontakt gebracht wird. Hierfür werden die Zusammensetzung bzw. die einzelnen Wirkstoffe auf das Getreide oder auf Pflanzenteile davon bzw. auf das Getreideprodukt appliziert. Die beiden Wirkstoffe Metconazol und Epoxiconazol können also im Gemisch oder getrennt appliziert werden. Bei der getrennten Anwendung erfolgt die Applikation der einzelnen Wirksubstanzen gleichzeitig

. Die einzelnen Wirkstoffe und auch die sie enthaltende Zusammensetzung werden dabei in der Regel in einer für den Pflanzenschutzbereich typischen Formulierung eingesetzt. Näheres hierzu wird nachstehend beschrieben.

Die Behandlung des Getreides oder von Pflanzenteilen davon bzw. der Getreideprodukte kann sowohl protektiv als auch kurativ, d.h. vor oder nach einer erfolgten Infektion mit Schadpilzen, erfolgen. Vorzugsweise erfolgt sie möglichst zeitnah zum Infektionsereignis, d.h. in möglichst kurzer Zeit vor oder nach der Infektion.

Die Anwendungstermine, die Anzahl der Applikationen und die speziell eingesetzten Aufwandmengen sind dabei an die jeweiligen Bedingungen anzupassen und müssen im Einzelfall vom Fachmann festgelegt werden.

Die Wirkstoffe können als solche oder in Form ihrer Formulierungen bzw. in Form der daraus bereiteten Anwendungsformen durch Versprühen, Vernebeln, Verstäuben, Verstreuen oder Gießen angewendet werden. Die Anwendungsformen richten sich ganz nach den Verwendungszwecken, v.a. nach der Getreideart und -sorte bzw. nach dem Getreideprodukt, auf die/das appliziert werden soll; sie sollten in jedem Fall möglichst die feinste Verteilung der erfindungsgemäß eingesetzten Wirkstoffe und auch der Hilfsstoffe gewährleisten.

Metconazol und Epoxiconazol bzw. Zusammensetzungen, die eine Kombination dieser beiden Wirkstoffe enthalten, werden typischerweise als Formulierungen eingesetzt, wie sie im Bereich des Pflanzen- und Vorratsschutzes üblich sind.

Übliche Formulierungen sind beispielsweise Lösungen, Emulsionen, Suspensionen, Dispersionen, Pasten, Stäubmittel, Streumittel, Pulver und Granulate.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im Wesentlichen in Betracht:
- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate).
- Oberflächenaktive Stoffe, wie Alkali-, Erdalkali-, Ammoniumsalze von aromatischen Sulfonsäuren, z.B. Ligninsulfonsäure, Phenolsulfonsäure, Naphthalinsulfonsäure und Dibutylnaphthalinsulfonsäure, sowie von Fettsäuren, Alkylarylsulfonate, Alkylsulfate, Alkylsulfonate, Fettalkoholsulfate, Fettsäuren und sulfatierte Fettalkoholglykolether, ferner Kondensationsprodukte von sulfoniertem Naphthalin und Naphthalinderivaten mit Formaldehyd, Kondensationsprodukte des Naphthalins bzw. der Naphthalinsulfonsäure mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Tristearylphenylpolyglykolether, Alkylarylpolyetheralkohole, Isotridecylalkohol, Alkohol- und Fettalkoholethylenoxid-Kondensate, ethoxyliertes Rizinusöl, Polyoxyethylen- oder Polyoxypropylenalkyl-ether, ethoxyliertes Polyoxypropylen, Laurylalkoholpolyglykoletheracetat, Sorbit-ester, Ligninsulfitablaugen, Methylcellulose oder Siloxane. Geeignete Siloxane sind beispielsweise Polyetherpolymethylsiloxan-Copolymere, die auch als "Spreader" oder "Penetratoren" bezeichnet werden.

Als inerte Formulierungshilfsmittel, insbesondere zur Herstellung von direkt versprühbaren Lösungen, Emulsionen, Pasten oder Öldispersionen, kommen im Wesentlichen in Betracht: Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylole, Paraffine, Tetrahydronaphthalin, alkylierte Naphthaline oder deren Derivate, Alkohole, wie Methanol, Ethanol, Propanol, Butanol und Cyclohexanol, Ketone wie Cyclohexanon und Isophoron, stark polare Lösungsmittel, z.B. Dimethylsulfoxid, N-Methylpyrrolidon oder Wasser.

Pulver-, Streu- und Stäubemittel können durch Mischen oder gemeinsames Vermahlen der wirksamen Substanzen mit einem festen Trägerstoff hergestellt werden. Granulate, z.B. Umhüllungs-, Imprägnierungs- und Homogengranulate, können durch Bindung der Wirkstoffe an feste Trägerstoffe hergestellt werden.

Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium-und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen Metconazol, Epoxiconazol oder deren Gemisch in einer Gesamtmenge von 0,01 bis 95 Gew.-%, vorzugsweise von 0,1 bis 90 Gew.-%, bezogen auf das Gesamtgewicht der Formulierung.

Produkte (Formulierungen) zur Verdünnung in Wasser sind beispielsweise wasserlösliche Konzentrate (SL), dispergierbare Konzentrate (DC), emulgierbare Konzentrate (EC), Emulsionen (EW, EO), Suspensionen (SC, OD), wasserdispergierbare und wasserlösliche Granulate (WG, SG) sowie wasserdispergierbare und wasserlösliche Pulver (WP, SP). Produkte (Formulierungen) für die Direktapplikation sind beispielsweise Stäube (DP), Granulate (GR, FG, GG, MG) und ULV- Lösungen (UL).

Wässrige Anwendungsformen können aus Lagerformulierungen, wie konzentrierten Lösungen, Emulsionskonzentraten, Suspensionen, Pasten, netzbaren Pulvern (Spritzpulver, Öldispersionen) oder wasserdispergierbaren Granulaten, durch Zusatz von Wasser bereitet werden und beispielsweise durch Versprühen appliziert werden.

Zur Herstellung von Emulsionen, Pasten oder Öldispersionen können Metconazol und Epoxiconazol als solche oder in einem Öl oder Lösungsmittel gelöst und mittels Netz-, Haft-, Dispergier- oder Emulgiermittel in Wasser homogenisiert werden. Es können aber auch aus der Wirksubstanz und Netz-, Haft-, Dispergier- oder Emulgiermittel und eventuell Lösungsmittel oder Öl bestehende Konzentrate hergestellt werden, die zur Verdünnung mit Wasser geeignet sind. Es versteht sich von selbst, dass die Anwendungsformen die in den Lagerformulierungen verwendeten Hilfsstoffe enthalten.

Die Wirkstoffkonzentrationen in mit Wasser verdünnten Zubereitungen können in größeren Bereichen variiert werden. Im Allgemeinen liegen sie zwischen 0,0001 und 10 Gew.-%, vorzugsweise zwischen 0,01 und 1 Gew.-%.

Den Wirkstoffen können Öle verschiedenen Typs, Netzmittel, Adjuvants, Herbizide, weitere Fungizide, Insektizide, Bakterizide, Wachstumsregulatoren oder auch Düngemittel gegebenenfalls auch erst unmittelbar vor der Anwendung (Tankmix), zugesetzt werden. Diese Mittel können zu den erfindungsgemäß eingesetzten Fungiziden im Gewichtsverhältnis 1:10 bis 10:1 zugemischt werden.

Die kombinierte Verwendung von Metconazol und Epoxiconazol mit einem oder mehreren im Pflanzenschutz üblichen Wirkstoffen, z.B. mit weiteren Fungiziden, kann sowohl dadurch erfolgen, dass man ein Gemisch dieser Wirkstoffe einsetzt (z.B. eine gemeinsame Formulierung oder ein Tankmix) als auch durch die sukzessive Applikation der einzelnen Wirkstoffe, wobei Metconazol und Epoxiconazol gleichzeitig appliziert werden.

Die folgende Liste von Funglziden, mit denen die erfindungsgemäß zum Einsatz kommenden Verbindungen (I) und (II) gemeinsam angewendet werden können, soll die Kombinationsmöglichkeiten erläutern, nicht aber einschränken:
- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazol, Dinitroconazol, Fenbuconazol, Fluquinconazol, Flusilazol, Hexaconazol, Imazalil, Myclobutanil, Penconazol, Propiconazol, Prochloraz, Prothioconazol, Tebuconazol, Triadimefon, Triadimenol, Triflumizol, Triticonazol, 5-Chlor-7-(4-methylpiperidin-1-yl)-6-(2,4,6-trifluorphenyl)-[1,2,4]triazolo[1,5-a]pyrimidin,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel,
- Sonstige Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid,
- Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin,
- Sulfensäurederivate wie Captafol, Captan, Dichlofluanid, Folpet, Tolylfluanid,
- Zimtsäureamide und Analoge wie Dimethomorph, Flumetover oder Flumorph.

Bevorzugt sind die weiteren Fungizide ausgewählt unter Prochloraz, Triticonazol, 5-Chlor-7-(4-methylpiperidin-1-yl)-6-(2,4,6-trifluorphenyl)-[1,2,4]triazolo[1,5-a]pyrimidin, Dimoxystrobin, Pyraclostrobin, Kresoxim-methyl, Fenpropimorph und Metrafenon.

Wenn Metconazol und Epoxiconazol in Kombination mit weiteren Fungiziden eingesetzt werden, so ist es bevorzugt, sie gemeinsam mit einem oder zwei weiteren Fungiziden zu verwenden.

In einer bevorzugten Ausführungsform für Feldapplikationen, d.h. Applikation auf lebende Pflanzen oder Pflanzenteile davon, verwendet man Metconazol und Epoxiconazol in Form einer wässrigen Spritzbrühe. Die Applikation erfolgt vorzugsweise durch Spritzen. Dabei wird entweder auf den gesamten oberirdischen Pflanzenteil oder aber nur auf einzelne Pflanzenteile appliziert. Die Wahl der einzelnen Pflanzenteile, auf die appliziert werden soll, hängt von der Pflanzenart und ihrem Entwicklungsstadium ab. Bevorzugt wird auf den gesamten oberirdischen Pflanzenteil oder aber auf die Teile appliziert, die besonders vor Toxin-Kontamination geschützt werden sollen bzw. die bevorzugt von Trichothecen-bildenden Pilzen befallen werden.

Allgemein werden Metconazol und Epoxiconazol bei der Feldapplikation in einer Gesamtmenge von 10 bis 1000 g/ha, vorzugsweise 10 bis 600 g/ha und besonders bevorzugt 20 bis 450 g/ha pro Applikation eingesetzt.

Im Einzelnen ist es unter Feldbedingungen bevorzugt, pro Applikation folgende Mengen an Aktivsubstanz einzusetzen:
- Metconazol (I): vorzugsweise 5 bis 500 g/ha; besonders bevorzugt 5 bis 300 g/ha; insbesondere 10 bis 200 g/ha.
- Epoxiconazol (II): vorzugsweise 5 bis 600 g/ha; besonders bevorzugt 5 bis 400 g/ha; insbesondere 10 bis 300 g/ha.

Pro Saison werden Metconazol und Epoxiconazol vorzugsweise 1 bis 5 Mal, besonders bevorzugt 1 bis 3 Mal und insbesondere 1 bis 2 Mal appliziert.

Die kombinierte Verwendung von Metconazol und Epoxiconazol hat eine synergistische Wirkung auf die Kontamination von Getreide mit Trichothecen-Toxinen und anderen Mykotoxinen, die von Trichothecen-produzierenden Schadpilzen stammen. "Synergistische Wirkung" bedeutet, dass die Wirkung auf die Kontamination von wenigstens einer Getreideart mit wenigstens einem Trichothecen-Toxin oder wenigstens einem anderen Mykotoxin, das von einem Trichothecen-produzierendem Schadpilz stammt, in überadditivem Maße erhöht wird. Dadurch wird die Kontamination mit diesen Mykotoxinen deutlich stärker verringert als dies ausgehend von der Wirksamkeit der einzelnen Wirkstoffe zu erwarten gewesen wäre. Zu erwartende Wirkungsgrade von Wirkstoffkombinationen lassen sich z. B. nach der Colby-Formel (S. R. Colby, Calculating Synergistic and Antagonistic Response of Herbicide Combinations, Weeds, 15, S. 20-22) ermitteln.

Die nachfolgenden Beispiele sollen die Erfindung veranschaulichen, ohne sie jedoch einzuschränken.

### Beispiele

### 1. Verminderung der Kontamination von Weizenkörnern mit Deoxynivalenol (DON) nach Behandlung mit Metconazol und Epoxiconazol unter Feldbedingungen

Freiland-Winterweizen der Sorte "Ritmo" wurde im Wachstumsstadium GS 25-29 (Bestockung) mit *Fusarium sp.* infizierten Roggenkörnern inokuliert. Die Applikation der Wirkstoffe erfolgte im Wachstumsstadium GS 63 (Blühbeginn). Sowohl Metconazol als auch Epoxiconazol wurden als Fertigformulierungen eingesetzt (Metconazol: Handelsbezeichnung "Caramba"; Epoxiconazol: Handelsbezeichnung "Opus"; Metconazol als SL = suspensible liquid; Epoxiconazol als SC = suspensible concentrate). Diese Formulierungen wurden entsprechend der gewünschten Konzentration mit Wasser verdünnt, und die Pflanzen wurden mit diesen verdünnten Zubereitungen durch Spritzen behandelt. Die Wirkstoffe wurden dabei gemeinsam als Tankmix appliziert. Zum Vergleich wurden auch nur die einzelnen Fungizide eingesetzt. Drei Wochen nach der Applikation wurde der Befall der Ähren mit Fusarium-Pilzen visuell ermittelt. Die Weizenkörner wurden geerntet und der DON-Gehalt der Körner wurde nach Extraktion und Analyse mittels HPLC/MS bestimmt. Zur vergleichenden Auswertung wurden der beim unbehandelten Weizen festgestellte Fusarium-Befall und der DON-Wert als 100% definiert. Eine Wirkung auf den Befall von 0% entspricht dem gleichen Befall wie in der unbehandelten Kontrolle, ein Wirkungsgrad von 100% entspricht 0% Befall. Eine Reduktion des DON-Gehalts von 0% entspricht dem gleichen DON-Gehalt wie in der unbehandelten Kontrolle, eine Reduktion von 100% entspricht einem DON-Gehalt unterhalb der Nachweisgrenze. Die beim behandelten Weizen festgestellten Werte sind in Tabelle 1 als relative Werte, d.h. als prozentualer Anteil, bezogen auf diese 100%, ausgedrückt. Die zu erwartenden Wirkungsgrade für Wirkstoffkombinationen wurden nach der Colby-Formel (S.R. Colby, Calculating Synergistic and Antagonistic Responses of Herbicide Combinations, Weeds, 15, Seiten 20-22, 1967) ermittelt und mit den beobachteten Wirkungsgraden verglichen.

**Tabelle 1**

| Bsp. | Wirkstoff | Aufwandmenge [g/ha] | Wirkung auf Befall [%] | Erwartete Wirkung [%]¹ | Reduktion DON-Gehalt [%] | Erwartete Reduktion DON-Gehalt [%]¹ |
|---|---|---|---|---|---|---|
| 1 | - | - | 0 | | 0² | |
| 2 | Metconazol | 45 | 27 | | 33 | |
| 3 | Epoxiconazol | 75 | 5 | | 0 | |
| 4 | Metconazol + | 45 | 56 | 31 | 41 | 33 |
| | Epoxiconazol | 75 | | | | |

| | | | | | | |
|---|---|---|---|---|---|---|
| ¹ nach Colby ² DON-Gehalt der Körner von nicht behandeltem Weizen: 33,7 mg/kg | | | | | | |

Wie die Ergebnisse zeigen, führt die kombinierte Verwendung von Metconazol und Epoxiconazol zu einer synergistischen Wirkung sowohl auf den Fusarium-Befall von Weizen als auch auf den DON-Gehalt der geernteten Körner.

## Patentansprüche

1. Verwendung von Metconazol in Kombination mit Epoxiconazol zur Verringerung oder Verhinderung der Kontamination von Getreide mit Toxinen, die von Trichothecen-produzierenden Pilzen gebildet werden, wobei Metconazol und Epoxiconazol im Gemisch oder getrennt, aber gleichzeitig, auf Getreide oder auf Pflanzenteile davon appliziert werden.

2. Verwendung einer Zusammensetzung, enthaltend Metconazol und Epoxiconazol, zur Verringerung oder Verhinderung der Kontamination von Getreide mit Toxinen, die von Trichothecen-produzierenden Pilzen gebildet werden.

3. Verwendung nach einem der vorhergehenden Ansprüche, wobei es sich bei den Trichothecen-produzierenden Pilzen um solche der Gattungen Fusarium, Trichoderma oder Stachybotrys handelt.

4. Verwendung nach einem der vorhergehenden Ansprüche, wobei es sich bei den Toxinen um Trichothecene oder Zearalenon handelt.

5. Verwendung nach Anspruch 4, wobei es sich bei den Trichothecenen um wenigstens eine der folgenden Substanzen handelt: Deoxynivalenol, Nivalenol, 3- und 15-Acetoxynivalenol, T-2 Toxin, HT-2 Toxin, Neosolaniol, Monoacetoxyscirpenol, Diacetoxyscirpenol, 15-Acetoxyscirpendiol, Fusarenon, T-2 Tetraol oder Verrucarol.

6. Verwendung nach einem der vorhergehenden Ansprüche, wobei das Getreide ausgewählt ist unter Weizen, Gerste, Roggen, Triticale, Hafer, Reis und Mais.

7. Verwendung nach einem der vorhergehenden Ansprüche, wobei Metconazol und Epoxiconazol in einem Mengenverhältnis von 10:1 bis 1:10 eingesetzt werden.

## Claims

1. The use of metconazole in combination with epoxiconazole for reducing or preventing the contamination of cereals with toxins formed by trichothecene-producing fungi, where metconazole and epoxiconazole are applied in admixture or separately, but simultaneously, to cereals or to plant parts thereof.

2. The use of a composition comprising metconazole and epoxiconazole for reducing or preventing the contamination of cereals with toxins from trichothecene-producing fungi.

3. The use according to any of the preceding claims, where the trichothecene-producing fungi are those of the genera Fusarium, Trichoderma or Stachybotrys.

4. The use according to any of the preceding claims, where the toxins are trichothecenes or zearalenone.

5. The use according to claim 4, where the trichothecenes are at least one of the following substances: deoxynivalenol, nivalenol, 3- and 15-acetoxynivalenol, T-2 toxin, HT-2 toxin, neosolaniol, monoacetoxyscirpenol, diacetoxyscirpenol, 15-acetoxyscirpendiol, fusarenon, T-2 tetraol or verrucarol.

6. The use according to any of the preceding claims, where the cereal is selected among wheat, barley, rye, triticale, oats, rice and maize.

7. The use according to any of the preceding claims, where metconazole and epoxiconazole are employed in a weight ratio of from 10:1 to 1:10.

## Revendications

1. Utilisation de metconazole en combinaison avec de l'époxiconazole pour diminuer ou empêcher la contamination de céréales par des toxines qui sont formées par des champignons produisant des trichothécènes, le metconazole et l'époxiconazole étant appliqués en mélange ou séparément, mais simultanément, sur des céréales ou des parties de plantes de celles-ci.

2. Utilisation d'une composition contenant du metconazole et de l'époxiconazole, pour diminuer ou empêcher la contamination de céréales par des toxines formées par des champignons produisant des trichothécènes.

3. Utilisation selon l'une quelconque des revendications précédentes, les champignons produisant des trichothécènes étant ceux des espèces Fusarium, Trichoderma ou Stachybotrys.

4. Utilisation selon l'une quelconque des revendications précédentes, les toxines étant des trichothécènes ou de la zéaralénone.

5. Utilisation selon la revendication 4, où il s'agit, pour les trichothécènes, d'au moins l'une des substances suivantes : déoxynivalénol, le nivalénol, le 3-acétoxynivalénol et le 15-acétoxynivalénol, la toxine T-2, la toxine HT-2, le néosolaniol, le monoacétoxyscirpénol, le diacétoxyscirpénol, le 15-acétoxyscirpènediol, la fusarénone, le tétraol T-2 ou le verrucarol.

6. Utilisation selon l'une quelconque des revendications précédentes, la céréale étant choisie parmi le blé, l'orge, le seigle, le triticale, l'avoine, le riz et le maïs.

7. Utilisation selon l'une quelconque des revendications précédentes, le metconazole et l'époxiconazole étant utilisés dans un rapport de quantités de 10:1 à 1:10.
